Europäisches Patentamt

European Patent Office

Office européen des brevets

(19)

(11) EP 1 607 626 A1

(12) **EUROPEAN PATENT APPLICATION**
published in accordance with Art. 158(3) EPC

(43) Date of publication:
21.12.2005 Bulletin 2005/51

(51) Int Cl.⁷: **F03G 3/06**, F03G 3/08

(21) Application number: 03786472.5

(22) Date of filing: 22.12.2003

(86) International application number:
PCT/RU2003/000572

(87) International publication number:
WO 2004/057183 (08.07.2004 Gazette 2004/28)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 23.12.2002 RU 2002134855

(71) Applicants:
• Linevich, Edvid Ivanovich
Primorsky krai, 692760 (RU)

• Ezhov, Alexandr Fedorovich
Vladivostok, 690005 (RU)

(72) Inventor: LINEVICH, Edvid Ivanovich
Primorsky krai, 692760 (RU)

(74) Representative: Ucinska, julita
Kancelaria Patentowa
ul. Strzelecka 8/15
PL-97-200 Tomaszow Mazowiecki (PL)

(54) **INERTIAL PROPELLER**

(57) The inventive inertial propeller relates to devices using inertia for moving objects, and can be used as an unsupported propeller for ground, air and space vehicles. Said propeller comprises an unbalanced weight (7), a drive unit provided with a gyroscope (1), and a control reverse unit (20) for controlling reverse of the unbalanced weight (7). Said gyroscope (1) is connected to one of two devices of the drive unit (3) whose second element is embodied in the form of the unbalanced weight (7).

FIG.1

## Description

Technical Field

The invention relates to the transporting, namely it relates to devices using inertia for moving objects, and can be applied as an unsupported propeller for ground, air and space vehicles. Also the invention relates to inertial motors.

Background Art

It is known a principle of an operation of a propeller provided with a ring-shaped rotor rotating in a horizontal plane with a high speed [Edvid I. Linevich. The Phenomenon of an Antigravity of Physical Bodies /PAAB/.- Khabarovsk.1991, 20 p.]. The principle is based on that this rotor is pushed out from area of space with the greater intensity in other area of space with smaller intensity of a nonuniformed gravitational field along a vertical.

It is known a principle of an operation of another propeller provided with motionless mass covered with a ring-shaped rotor rotating with a high speed [Edvid I. Linevich. About an engineering opportunity of control by rate of time / "Graviton", 2002, No.8, P.10-11]. This principle is based on interaction of the motionless mass with a nonuniformed gravitational field created by means of the rotating rotor.

It will be possible in the future to create propellers which operate in accordance with the above mentioned principles, when the technological level will allow to make rotors rotations having both speed about speed of light and a mass about about a milligram.

It is known the hoisting tackle which contains a cargo platform displacing on directing by means of a rise drive, and a latching mechanism having getting jammed elements [Inventor's Certificate SU 650977 published 01.24.1977]. The rise drive comprises a motor, a reducer, and a propeller provided with at least two unbalanced weights which have a vertical symmetry plane. The unbalanced weights are installed on shafts coaxially and connected therebetween by means of the reducer providing their synchronous rotation in a direction opposite sense of rotation of the motor. The latching mechanism has a pusher, and a wedge interacting with the directing by one its side and with a pusher another its side, thus the cargo platform has a cam contacting to the pusher. The propeller displaces the platform by means of interaction with a support (the directing), it is unsuitable for use, for example, for flight vehicles.

It is known a device in which the effect of displacement of masses centre of system is obtained by means of change of inertness of system by its interior forces [Makukhin S. Unknown features of mechanics / "Graviton", 2001, No.7, p.3, 9]. The device works in a start-stop mode. The known device comprises a carriage with a rack on which ends of two rods are gimbal-mounted by their ends. There are two weights located on the opposite ends of the rods. The weights have possibility of symmetric displacement in a direction orthogonally to the rods in a plane of their rotation around of joints. The known device is difficult and ineffective from the point of view of an opportunity of an engineering embodiment. And there is no designer study of the device embodiment.

Known Tolchin's inertial propeller is choosen as a prototype. The propeller comprises a case with two unbalanced weights, a spring drive, a brake device having a brake cam, a brake carrier socket, a spring, thus the brake carrier socket is spring-bias by the spring, and the brake cam is mounted on a rotation axis of the unbalanced weights and has a possibility of interaction with the brake carrier socket in a start-stop manner within a range of rotation 330-360° [Shipov G.I. The theory of physical vacuum in a popular presentation. A development of Einstein's Theory of Uniform Field. - Russia, Moscow.: Cyrillics-1, Ltd., 2002, P.96-98]. The known inertial propeller has some deficiencies as follows. Angle value of braking of the unbalanced weights is small (it is 30°) therefore useful thrust operates only during 1/12 of a duty cycle of the weights rotation. Braking of the unbalanced weights is carried out by means of mechanical abrasion between the brake cam and the brake carrier socket. It is impossible to operate value of acceleration-braking of weights during one duty cycle of operation of the device. The drive of the unbalanced weights is carried out via a mechanical reducer. The listed reasons do not allow to make a high-performance unsupported motor on the basis of this Tolchin's inertial propeller.

Disclosure of the Invention

It is a primary object of the present invention to create an effective unsupported propeller having a reliable control system.

The inventive inertial propeller comprises a housing, a rotation drive unit provided with an unbalanced weight and made with possibility of cyclical acceleration-braking. That is new that the propeller in addition comorises a control reverse unit for controlling reverse of the unbalanced weight, and at least one gyroscope made as a prompt rotaried cylindrical body. Said gyroscope is connected to one of two devices of the rotation drive unit. Said devices are carried out with possibility to rotate with power one in relation to another and to rotate freely in relation to the housing. The second device is carried out as the unbalanced weight, and besides the housing is placed on an axis of the housing with possibility of rotation around the housing axis and provided with a fixing means for elastic fixing an inclination of the gyroscope in its non-working position in relation to the housing axis, thus an axis of rotation of the gyroscope is not parallel neither with an axis of rotation of the devices of the rotation drive unit nor with the housing axis. And the control reverse unit has possibility to control a position of the unbalanced weight and to operate in the middle of each duty cycle.

The devices of the rotation drive unit can be made as a rotor and a stator of an electric motor respectively. Thus the rotor is unbalanced concerning an axis of its rotation and is used as the unbalanced weight, and the stator is fixed rigidly on an axis installed on bearings coaxially to the rotor within the housing. And the gyroscope is fixed on the stator in such manner that the axis of rotation of the gyroscope is located perpendicularly the axis of rotations of the rotor.

The unbalanced weight can be carried out as a cylindrical body set on the rotor axially to the rotor with possibility to rotate freely in relation to the rotor.

The rotation drive unit can comprise a hollow rotor covering radially the stator having a cavity. And the gyroscope is placed within the cavity thus the axis of rotation of the gyroscope is perpendicular to the housing axis.

A cross point of the axes of rotation of the gyroscope and the housing axis can coincide with the centre of masses of the gyroscope.

The fixing means can have a lever, thus one end of the lever is rigidly connected to the axis of rotation of the stator, and other end of the lever is spring-bias tangentially on two its lateral sides in relation to the housing.

The control reverse unit can comprise at least one gauge for detecting an angular position of the centre of masses of the unbalanced weight. The gauge is mounted on the housing on a plane including both the housing axes and the axis of rotations of the rotor so to be displaced from this axis of rotations of the rotor. The control reverse unit also comprises a high-speed circute changer for switching a direction of rotation of the electric motor. This high-speed circute changer provided with a power input, a power output, and control inputs. Windings of the electric motor are connected to the power output, an electric power supply is connected to the power input, and an output of the gauge is connected to one of the control inputs.

The control reverse unit can comprise a means for initial manual start-up of the electric motor, thus an output of said means is connected to one of the control inputs.

The electric power supply can have possibility to change its capacity. It can be a pulse electric power supply which may have possibility to operate in a condition of a resonance with the electric motor.

The housing can be mounted on an axis of a vehicle.

Brief Description of the Figures on the Drawings

The invention is described with references to the accompanying drawings.

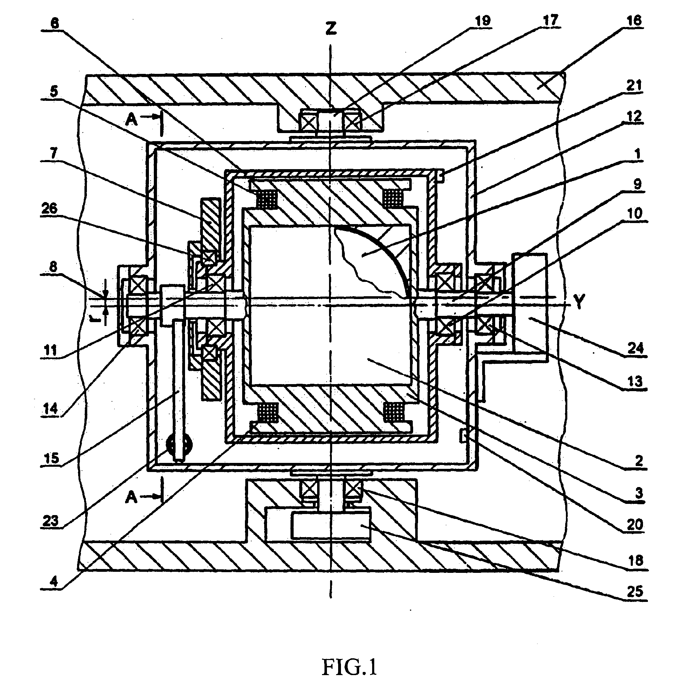

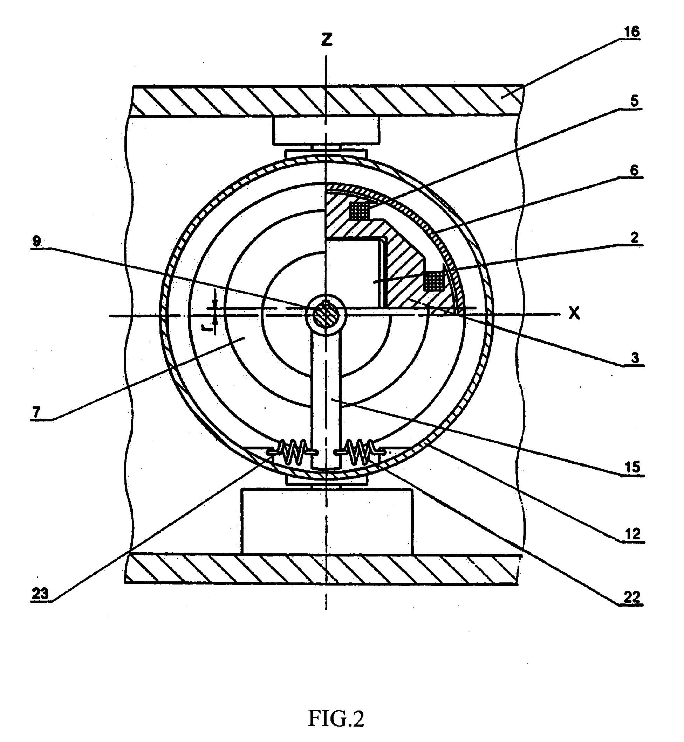

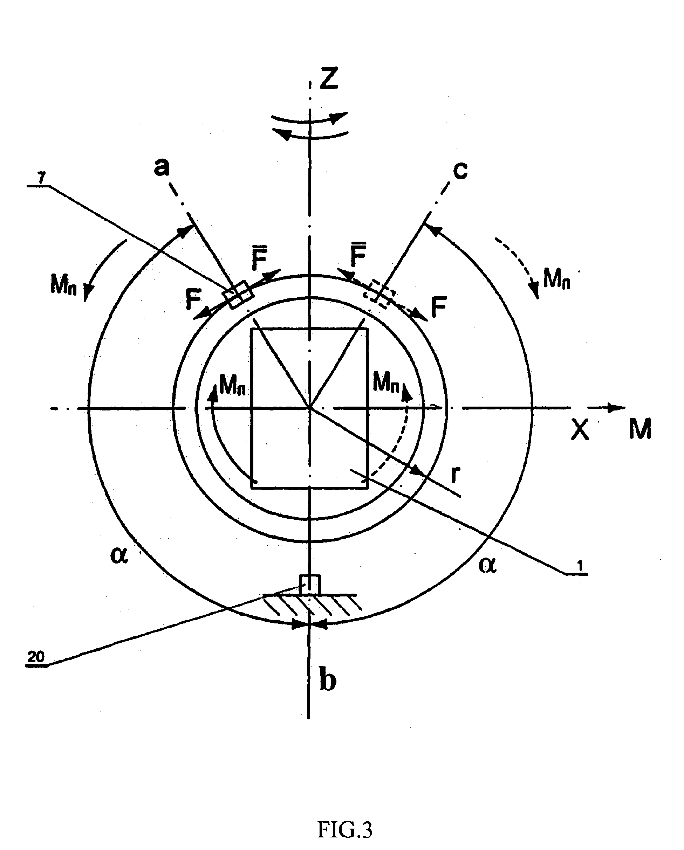

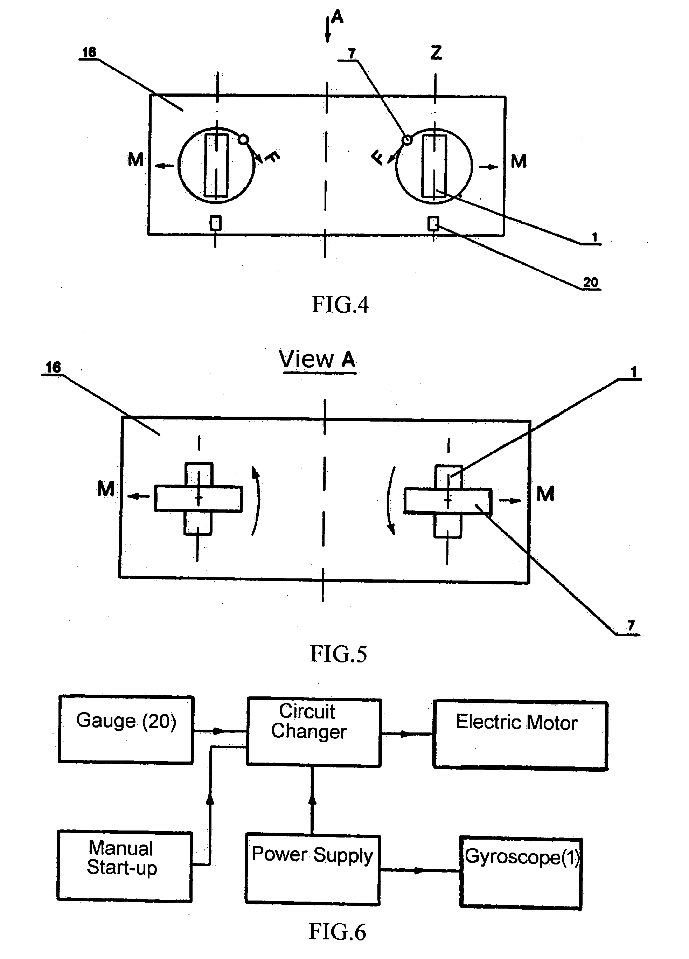

Fig.1 shows cross-sectional view an inertial propeller wich is taken along a plane of axis Z and Y. Fig.2 shows a cross-sectional view of the propeller of Fig.1. Fig.3 shows a scheme illustrating a principle of an operation of the inventive divice. Fig.4 shows a scheme of one of variants of arranging the propellers on a vehicle. Fig.5 shows a top view A of Fig.4. Fig.6 shows an one-linear function chart of a control reverse unit for controlling an unbalanced weight.

Following digital designations are used for drawings: 1 - a gyroscope; 2 - a case of the gyroscope; 3 - a stator of an electric motor; 4 and 5 - windings of the electric motor; 6 - a rotor; 7 - an unbalanced weight; 8 - an axis of rotation of the unbalanced weight 7; 9 - an axis of the stator; 10 and 11 - bearings for rotation the rotor 6 around the axis 9; 12 - a housing of a propeller; 13 and 14 - bearings of the case 12 for rotation around the axis 9; 15 - a lever; 16 - a platform of a vehicle; 17 and 18 - bearings; 19 - an axis of rotation of the case 12; 20 - a gauge; 21 - a gauge-mark of the rotor 6; 22 and 23 - springs; 24 - a current collector of the stator; 25 - a current collector of the case; 26 - a bearing for the rotation of the unbalanced weight 7 around the axis 8.

Following letter designations are used for drawings: $X, Y, Z$ - axis of ordinates, so the axis X coincides with an axis of rotation of the gyroscope 1, the axis Y coincides with the axis 9 of rotation of both the stator 3 and the rotor 6, and the axis $Z$ coincides with the axis 19 of rotation of the case 12; $M$ - a kinetic moment of the gyroscope 1; $M_\pi$ - a torque created by a drive unit; $F$ - a tangential force effective on the unbalanced weight 7 and created by a drive unit; $F$ - a tangential inertial force created by the unbalanced weight 7; $r$ - radius of rotation of the centre of masses of the unbalanced weight 7; $a, b, c$ - points of a motion trajectory of the centre of masses of the unbalanced weight 7 during a duty cycle; $\alpha$ - amplitude of angular oscillations of the unbalanced weight 7.

The Example for Carrying out the Invention

The case 2 of the gyroscopes 1 is fixed motionlessly with the stator 3. The rotor 6 can rotate freely relatively of the stator 3 and the axis 9 by means of the bearings 10, 11. Simultaneously the axis 9 may rotate freely in bearings 13, 14 relatively of the case 12. Its rotation is restricted by the lever 15 fixed by springs 22, 23. These springs have a small rigidity and are intended for correct fixing the gyroscope 1 relatively of the axis 19 for a run-down state of the propeller. The unbalanced weight 7 is made as a heavy cylinder installed on the rotor 6 by the bearing 26 with possibility of rotation. Its axis 8 is located with an eccentricity r relatively of the axis 9. The current collectors 24, 25 are intended for feeding power supply to both the windings of the electric motor and to a gyroscope, and also for signaling control from the gauge 20. A source of power supplies is onboard the vehicle 16 and is not shown conditionally.

As it is shown on Fig 4, 5 it is necessary to mount on the vehicle at least two similar inertial propellers having elements moving symmetrically to remove vibration in a plane of the axes **X, Y.**

The inertial propeller operates as follows.

The source of power supplies connect to the gyroscope 1. A button "manual start-up" is pressed and released after the gyroscope 1 has got necessary rotation speed. As result the rotor 6 has got necessary speed, and the unbalanced weight 7 has accumulated energy, thus the case 12 turns around the axis **Z** by means of a precession of the gyroscope 1. It permissible that the unbalanced weight 7 goes from the point **a** to the point **b**. As soon as the centre of unbalanced weight 7 appears opposite to the gauge 20 (in the point b), this gauge will submit a signal to a circuit changer, and the circuit changer will switch a direction of rotation.

Thus rotation of the unbalanced weight 7 will decelerate with emersion of the tangential force *F* by action of the constant torque $M_\Pi$, therefore it will appear the tangential inertial force *F* directed to the contrary of the torque $M_\Pi$. The unbalanced weight 7 will stop for one instant in the point c, and then it will move in the opposite direction being accelerated by action of the constant torque $M_\Pi$. The unbalanced weight 7 will have the peak kinetic energy in the point b, in the same time a direction of rotation will be switched again by means of the gauge 20, and then the unbalanced weight 7 will decelerate by the torque $M_\Pi$ with emersion of the tangential force *F*, and the opposite tangential inertial force will apper again. The unbalanced weight 7 will stop for one instant in the point a, where there will be a next change of a direction of the torque $M_\Pi$. Then above-mentioned cycle of movement will repeated. During operation of the propeller, the unbalanced weight 7 oscillates around the axis Y (the axis 9 on Fig.1, 2) with angular amplitude α, thus the housing 12 oscillates too around this axis Z (the axis 19 on Fig.1, 2). Both said angular amplitude and speed of said oscillation depend from both said kinetic moment *M* and said torque $M_\Pi$. During the cycle of oscillations the tangential inertial force is directed mainly in a direction of the axis **Z.**

There are known theoretical and experimental properties of a gyroscope. The principle of an operation of the inventive propeller is grounded on these properties as follows.

1) The gyroscope has an inertia plane (it coincides with a rotation plane of the rotor).
2) If the torque $M_\Pi$ will be applied on inertia plane, the gyroscope will turn a vector of this torque on 90°.
3) The gyroscope counteracts to a transversal turn of its inertia plane with a force which is proportional to value of the torque $M_\Pi$.
4) The inertia plane of the gyroscope rotates (precesses) with a constant speed under action of the constant torque $M_\Pi$.

The electric motor of the propeller creates the constant torque $M_\Pi$ affixed on the one hand to the unbalanced weight 7 and on the other hand to the gyroscope 1 through the stator 3. By means of action $M_\Pi$ the unbalanced weight 7 is accelerated, and the gyroscope 1 precesses with constant speed, i.e. rotates without acceleration together with both the stator 3 and the housing 12. It means that an uncompensated external force operates on the centre of masses of system "unbalanced weight - gyroscope" (hence, it operates on all device). Said force is the tangential inertial force of the unbalanced weight.

Also it has to be noted that movement of the centre of masses of the propeller is carried out not due to energy of the onboard source of power supplies, it is carried out due to interaction between a field of inertial forces and a gravitational field.

There is no necessity to take aboard the large power supplies for long-distance space flights if the vehicle will be provide with the propeller made with possibility to operate in a condition of a resonance with the electric motor.

Below efficiency of a propeller is determined. The duty cycle of the propeller includes four equal subcycles. Let the propeller is used for uprise from a surface of the Earth, thus thrust force should satisfy to the following condition:

$$m \cdot a > M \cdot g, \qquad (1)$$

где      m - mass of the unbalanced weight,
a - medial acceleration of the unbalanced weight,
M - the complete mass of the device,
g - a free fall acceleration.

From (1) it turns out the formula of necessary pulsing power of the drive unit for uprise from a surface of the Earth

$$P > 3{,}36 \cdot \frac{(M \cdot g)^3 \cdot r}{m}. \qquad (2)$$

It's admissible: r = 0,005 m,
M = 1000 kg,
m = 30 kg ,
in this case

$$P > 3{,}36 \cdot \sqrt{\frac{(1000 \cdot 9{,}81)^3 \cdot 0{,}005}{30}} \approx 42 kW.$$

If thus quantity of the kinetic moment of the gyroscope will be equal 100 kg·m²/sec , an angular oscillations amplitude of the housing around the axis **Z** will be about one degree.

**Claims**

1. An inertial propeller comprising a housing, a rotation drive unit provided with an unbalanced weight and made with possibility of cyclical acceleration-braking, wherein the propeller in addition comorises a control reverse unit for controlling reverse of the unbalanced weight, and at least one gyroscope made as a prompt rotaried cylindrical body, said gyroscope is connected to one of two devices of the rotation drive unit, said devices made with possibility to rotate with power one in relation to another and to rotate freely in relation to the housing, the second device is carried out as the unbalanced weight, and besides the housing is placed on an axis of the housing with possibility of rotation around the housing axis and provided with a fixing means for elastic fixing an inclination of the gyroscope in its non-working position in relation to the housing axis, thus an axis of rotation of the gyroscope is not parallel neither with an axis of rotation of the devices of the rotation drive unit nor with the housing axis, and the control reverse unit has possibility to control a position of the unbalanced weight and to operate in the middle of each duty cycle.

2. The propeller of claim 1, wherein the devices of the rotation drive unit are made as a rotor and a stator of an electric motor respectively, thus the rotor is unbalanced concerning an axis of its rotation and is used as the unbalanced weight, and the stator is fixed rigidly on an axis installed on bearings coaxially to the rotor within the housing, and besides the gyroscope is fixed on the stator in such manner that the axis of rotation of the gyroscope is located perpendicularly the axis of rotations of the rotor.

3. The propeller of claim 2, wherein the unbalanced weight is carried out as a cylindrical body set on the rotor axially to the rotor with possibility to rotate freely in relation to the rotor.

4. The propeller of claim 3, wherein the rotation drive unit comprises a hollow rotor covering radially the stator having a cavity, and the gyroscope is placed within the cavity, thus the axis of rotation of the gyroscope is perpendicular to the housing axis.

5. The propeller of claim 4, wherein a cross point of the axes of rotation of the gyroscope and the housing axis coincides with the centre of masses of the gyroscope.

6. The propeller of claim 5, wherein the fixing means has a lever, thus one end of the lever is rigidly connected to the axis of rotation of the stator, and other end of the lever is spring-bias tangentially on two its lateral sides in relation to the housing.

7. The propeller of claim 2, wherein the control reverse unit comprises at least one gauge of an angular position of the centre of masses of the unbalanced weight which is mounted on the housing on a plane of both the housing axes and the axis of rotations of the rotor to be displaced from the axis of rotations of the rotor, a high-speed circute changer for switching a direction of rotation of the electric motor, and the high-speed circute changer provided with a power input, a power output, and control inputs, thus windings of the electric motor are connected to the power output, an electric power supply is connected to the power input, and an output of the gauge is connected to one of the control inputs.

8. The propeller of claim 7, wherein the control reverse unit comprises a means for initial manual start-up of the electric motor, thus an output of said means is connected to one of the control inputs.

9. The propeller of claim 8, wherein it is the electric power supply having possibility to change its capacity.

10. The propeller of claim 9, wherein the electric power supply is a pulse electric power supply.

11. The propeller of claim 10, wherein the electric power supply has possibility to operate in a condition of a resonance with the electric motor.

12. The propeller of any claim 1-11, wherein the housing is mounted on an axis of a vehicle.

FIG.1

FIG.2

FIG.3

FIG.4

View A

FIG.5

| Gauge (20) | → | Circuit Changer | → | Electric Motor |

| Manual Start-up | | Power Supply | → | Gyroscope(1) |

FIG.6

**INTERNATIONAL SEARCH REPORT**

| International application No. |
| --- |
| PCT/RU 2003/000572 |

| A. | CLASSIFICATION OF SUBJECT MATTER |
| --- | --- |

F03G 3/06, 3/08

According to International Patent Classification (IPC) or to both national classification and IPC

| B. | FIELDS SEARCHED |
| --- | --- |

Minimum documentation searched (classification system followed by classification symbols)

F03G 3/06, 3/08, G01C 19/00,19/44-19/56, B06B 1/16

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | RU 2097600 C1 (SAFONOV BORIS FILIPPOVICH) 27.11.1997 | 1-12 |
| A | GB 2090404 A (GEOFFREY COLIN RUSSELL) 07.Jul.1982, page 3, lines 45-115, figures 6, 10 | 1-12 |
| A | GB 2270753 A (AKINWUNMI ADEGBOYE) 23.03.1994, the abstract, figures 1, 5-8 | 1-12 |
| A | M.Z.LITVIN-SEDOI. Upravlenie kosmicheskimi koroblyami. Moscow, izd. Moskovskogo Universiteta, 1967, pages 250-251, figure 98 | 1-12 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| (26.02.2004) | (04.03.2004) |

| Name and mailing address of the ISA/ <br> **RU** | Authorized officer |
| --- | --- |
| Facsimile No. | Telephone No. |

Form PCT/ISA/210 (second sheet) (July 1992)